# EUROPEAN PATENT APPLICATION

(11) **EP 4 216 598 A1**
(43) Date of publication of application: **26.07.2023**
(21) Application number: 23151446.4
(22) Date of filing: 13.01.2023
(51) Int. Cl.: H04W 24/08, H04W 24/10

(54) **BUFFERING OF LAYER THREE MESSAGES FOR SUBSCRIBER TRACING**

(30) Priority: 20.01.2022 US 202263301217 P
(71) Applicant: Nokia Technologies Oy, 02610 Espoo (FI)
(72) Inventor: ZDOBYLAK, Lukasz, Wroclaw (PL); JARONI, Wojciech, 53-611 Wroclaw (PL); ANDRIANOV, Anatoly, Schaumburg, 60173 (US)
(74) Representative: Nokia EPO representatives

(57) **Abstract**

Systems, methods, apparatuses, and computer program products for buffering of messages for more complete subscriber or user equipment tracing are provided. For example, a method can include buffering information needed for an individual trace prior to an activation opportunity of the individual trace. The method may also include providing the buffering information to a trace collection entity conditioned on the individual trace being activated.

## Description

### FIELD:

Some example embodiments may generally relate to communications including mobile or wireless telecommunication systems, such as Long Term Evolution (LTE) or fifth generation (5G) radio access technology or new radio (NR) access technology, or other communications systems. For example, certain example embodiments may generally relate to systems and/or methods for providing buffering of messages for more complete subscriber or user equipment tracing.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

### SUMMARY:

An embodiment may be directed to an apparatus. The apparatus can include at least one processor and at least one memory comprising computer program code. The at least one memory and computer program code can be configured, with the at least one processor, to cause the apparatus at least to perform buffering information needed for an individual trace prior to an activation opportunity of the individual trace. The at least one memory and computer program code can also be configured to perform providing the buffering information to a trace collection entity conditioned on the individual trace being activated.

An embodiment may be directed to an apparatus. The apparatus can include at least one processor and at least one memory comprising computer program code. The at least one memory and computer program code can be configured, with the at least one processor, to cause the apparatus at least to perform receiving instructions that buffering of information is needed to supplement an individual trace, prior to an activation opportunity of the individual trace. The at least one memory and the computer program code can be further configured to perform configuring an access node to perform the buffering of the information needed to supplement the individual trace, prior to the activation opportunity of the individual trace, in accordance with the received instructions.

An embodiment may be directed to an apparatus. The apparatus can include at least one processor and at least one memory comprising computer program code. The at least one memory and computer program code can be configured, with the at least one processor, to cause the apparatus at least to perform receiving first information buffered prior to an activation opportunity of an individual trace. The at least one memory and computer program code can also be configured, with the at least one processor, to cause the apparatus at least to perform receiving second information obtained from the individual trace. The at least one memory and computer program code can further be configured, with the at least one processor, to cause the apparatus at least to perform correlating the first information with the second information. The at least one memory and computer program code can also be configured, with the at least one processor, to cause the apparatus at least to perform providing the correlated first information and second information as complete trace information.

An embodiment may be directed to a method. The method may include buffering information needed for an individual trace prior to an activation opportunity of the individual trace. The method may also include providing the buffering information to a trace collection entity conditioned on the individual trace being activated.

An embodiment may be directed to a method. The method may include receiving instructions that buffering of information is needed to supplement an individual trace, prior to an activation opportunity of the individual trace. The method may also include configuring an access node to perform the buffering of the information needed to supplement the individual trace, prior to the activation opportunity of the individual trace, in accordance with the received instructions.

An embodiment may be directed to a method. The method may include receiving first information buffered prior to an activation opportunity of an individual trace. The method may also include receiving second information obtained from the individual trace. The method may further include correlating the first information with the second information. The method may additionally include providing the correlated first information and second information as complete trace information.

An embodiment may be directed to an apparatus. The apparatus may include means for buffering information needed for an individual trace prior to an activation opportunity of the individual trace. The apparatus may also include means for providing the buffering information to a trace collection entity conditioned on the individual trace being activated.

An embodiment may be directed to an apparatus. The apparatus may include means for receiving instructions that buffering of information is needed to supplement an individual trace, prior to an activation opportunity of the individual trace. The apparatus may also include means for configuring an access node to perform the buffering of the information needed to supplement the individual trace, prior to the activation opportunity of the individual trace, in accordance with the received instructions.

An embodiment may be directed to an apparatus. The apparatus may include means for receiving first information buffered prior to an activation opportunity of an individual trace. The apparatus may also include means for receiving second information obtained from the individual trace. The apparatus may further include means for correlating the first information with the second information. The apparatus may additionally include means for providing the correlated first information and second information as complete trace information.

### BRIEF DESCRIPTION OF THE DRAWINGS:

For proper understanding of example embodiments, reference should be made to the accompanying drawings, wherein:
FIG. 1 illustrates non-traceable subscriber trace content for long term evolution;
FIG. 2 illustrates non-traceable subscriber trace content for fifth generation standalone;
FIG. 3 illustrates a sequence flow for buffering of messages in a subscriber trace, according to certain embodiments;
FIG. 4 illustrates an example flow diagram of a method, according to an embodiment;
FIG. 5 illustrates an example flow diagram of a method, according to an embodiment;
FIG. 6 illustrates an example flow diagram of a method, according to an embodiment; and
FIG. 7 illustrates an example block diagram of a system, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing buffering of messages for more complete subscriber or user equipment tracing, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Certain embodiments may have various aspects and features. These aspects and features may be applied alone or in any desired combination with one another. Other features, procedures, and elements may also be applied in combination with some or all of the aspects and features disclosed herein.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

There has been a significant increase in the number of user equipment in networks, such as fifth generation (5G) network. There has also been a significant increase in the number of Layer 3 messages exchanged to serve UEs' transmissions.

There are two main use cases, described in third generation partnership project (3GPP) technical specification (TS) 32.421, for deep troubleshooting of various user equipment (UE) problems based on Layer 3 (L3) messaging tracing functionality. A first use case is cell trace, which can have management based activation. Cell trace can be activated per cell or set of cells and can capture full communication of all UEs within the targeted cell. A second use case is subscriber/equipment trace, which can have signaling based activation. Subscriber/equipment trace can be directed to a particular subscriber or UE. Subscriber/equipment trace can be triggered with usage of UE/subscriber identifier can span the whole network, following a targeted subscriber/UE across different network elements.

With the growing number of UEs and messages exchanged to serve UEs, a cell trace can generate a huge amount of data. The cell trace data, in most cases, may be filtered out and discarded as unnecessary content. Collecting large amount of data to be discarded later can be considered very inefficient. Such an approach can increase the utilization on the radio access network (RAN) devices involved in trace collection can consume valuable bandwidth on typically capacity restricted backhauls. Moreover, such an approach can consume storage and can consume resources in post-processing.

With a growing number of messages being exchanged, the targeted subscriber trace use case may be seen by operators as the better option, assuming the trace is able to provide enough information for troubleshooting.

In the RAN layer, at the base transceiver station (BTS), both subscriber trace and cell trace may aim to collect same/similar information but with different scope of interest, namely an entire cell as opposed to a particular UE/subscriber. The collected information may include radio resource control (RRC) messages, S 1 application protocol (S1AP) messages, X2 messages, Xn messages, and the like.

In the RAN layer, operators may desire trace data containing the full message flow, including all relevant messages, for a specific subscriber.

Using previous approaches, however, the specific subscriber's troubleshooting data may not contain all needed information. For signaling based activation, the tracing data collection can be triggered at too late a phase at the BTS. More specifically, the initial phase of network acquisition, which may be an important signaling exchange, may have already occurred before tracing can be activated. As a result, important trace data related to the connection setup for troubleshooting purposes may be missing for the specific subscriber. Operators may try to work around the above issues by utilizing cell trace functionality, and thereby enabling trace cell-wide.

The use of cell trace in previous approaches may have its own drawbacks, particularly as a way of providing some further information regarding one particular subscriber. Cell trace is started at the BTS where, according to 3GPP specifications for long term evolution (LTE) and 5G radio, the real permanent UE/Subscriber identifiers are unknown. Therefore, the correlation of the collected trace data with other data types relevant for troubleshooting the particular UE may be challenging.

Additionally, cell trace may be started at a particular BTS, but such a trace is not propagated when a given UE hands over to another cell/BTS. Therefore, the operator may potentially miss the data collected from the target Cell/BTS to which the UE moves. So, unless the operator starts cell tracing on multiple cells, which may often not be needed or may even be wholly irrelevant, the collected trace data may be incomplete and potentially insufficient for proper troubleshooting.

Additionally, in such an approach, huge amounts of data, from multiple irrelevant UEs and multiple irrelevant cells, may need to be collected. Then this huge amount of data may need to be correlated with traces collected from the core network to filter only required data. The core network elements involved may include, for example, mobility management entity (MME) and access and mobility management function (AMF). Additionally, in such an approach, the huge amount of data makes it too expensive and/or impractical to have online, real-time trace analysis, which may be useful to perform troubleshooting properly.

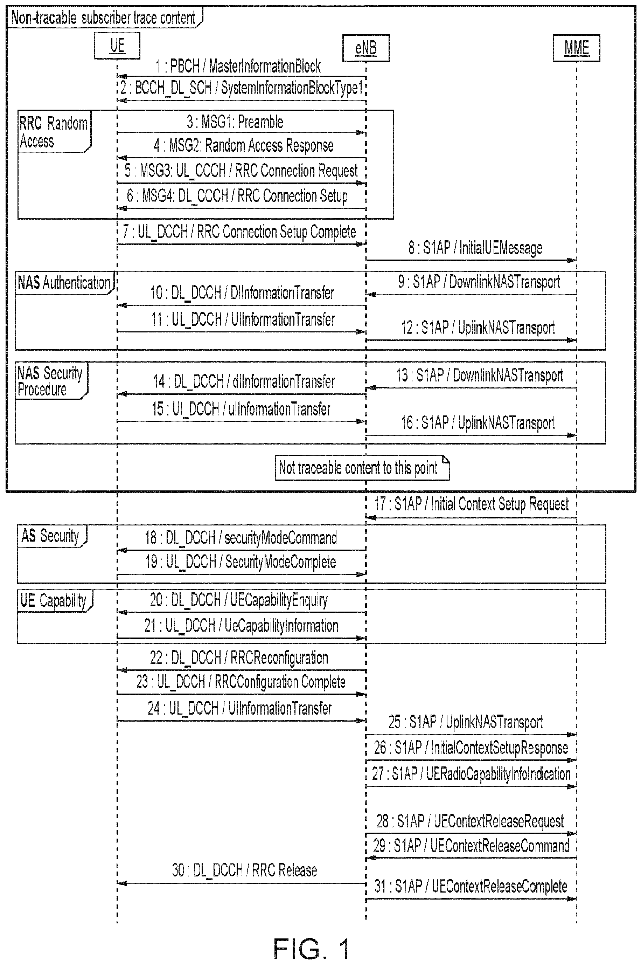

There may be a large amount of content that may be non-traceable both in LTE and in 5G standalone (SA). FIG. 1 illustrates an example of non-traceable subscriber trace content for LTE. Some of the non-traceable content for LTE can be radio resource control (RRC) content. Non-traceable RRC content can include MasterInformationBlock for the physical broadcast channel (PBCH) for wideband and narrowband Internet of things (NB-IOT), as shown at 1 in FIG. 1. Non-traceable RRC content can also include, for broadcast control channel (BCCH) downlink (DL) scheduling channel (SCH), systeminformationBlockType1, shown at 2 in FIG. 1, as well as systemInformation for system information block (SIB)2 to SIBn. Both of these BCCH-DL-SCH information may be for wideband and NB-IOT.

Non-traceable RRC content can further include, for uplink (UL) common control channel (CCCH), the RRC connection request shown at 5 in FIG. 1, and DL CCCH, the RRC connection setup shown at 6 in FIG. 1. Similarly, non-traceable RRC content can include, for UL dedicated control channel (DCCH), RRC connection setup complete shown at 7 in FIG. 1 and UlInformationTransfer shown at 11 in FIG. 1, and for DL DCCH, DlInformationTransfer, shown at 10 in FIG. 1.

Additionally, some of the non-traceable content for LTE can be SlAP content. In particular, non-traceable content can include InitialUEMessage shown at 8 in FIG. 1, DownlinkNASTransport shown at 9 in FIG. 1, and UplinkNAS Transport shown at 12 in FIG. 1.

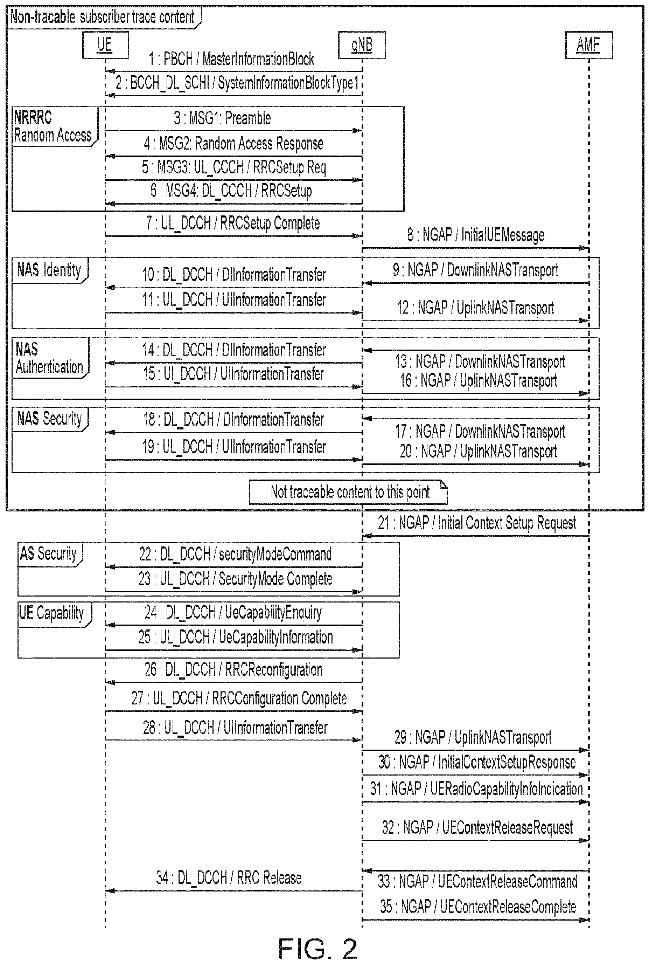

FIG. 2 illustrates an example of non-traceable subscriber trace content for 5G SA. As mentioned above, 5G SA may also include non-traceable content. Non-traceable content for 5G SA can include new radio (NR) RRC information and next generation application protocol (NGAP) information. The NR-RRC non-traceable information can include, MasterInformationBlock for PBCH shown at 1 in FIG. 2 and SystemInformationBlockType1 for BCCH DL SCH shown at 2 in FIG. 2. The NR-RRC non-traceable information can also include, for UL CCCH, RRC setup request shown at 5 in FIG. 2. The NR-RRC non-traceable information can further include, for DL CCCH, RRC setup shown at 6 in FIG. 2. Similarly, the NR-RRC non-traceable information can include, for UL DCCH, RRC setup complete shown at 7 in FIG. 2 and UlInformationTransfer shown at 11 in FIG. 2. Moreover, the NR-RRC non-traceable information can include, for DL DCCH, DlInformationTransfer shown at 10 in FIG. 2.

As mentioned above, the 5G SA non-traceable information can include NGAP information. For example, this non-traceable information can include InitialUEMessage shown at 8 in FIG. 2, DownlinkNASTransport shown at 9 in FIG. 2, and UplinkNASTransport shown at 12 in FIG. 2.

These are provided as examples of non-traceable information when applying subscriber tracing using previous approaches. Although 5G SA is provided as an example, certain embodiments may be used with 5G non-standalone (NSA), sixth generation (6G), or other radio access networks.

In certain embodiments, the BTS can buffer the information needed for subscriber trace regardless of whether a trace is active and attach the information to the trace records upon the BTS being instructed to start tracing. The information to be buffered can be messages exchanged before BTS is instructed via signaling activation to start tracing a particular UE.

In certain embodiments, when a UE starts communication, the BTS can buffer exchanged messages. When tracing is triggered, the BTS can attach all buffered messages to the traced content. If the UE is to be traced, the BTS should receive a tracing trigger by a certain point. If that point passes, the BTS may discard the data from the buffer.

If an operator triggers the subscriber trace at the appropriate time, the operator who triggers the subscriber trace on the core network can receive complete information. Certain embodiments can, in this way, provide the operator with adequate information to allow proper troubleshooting without gaps and/or missing data. The operator will not be forced to use a cell trace workaround resulting in huge unnecessary data being collected and filtered out and discarded in cases where the operator really wants to troubleshoot only a single UE.

As will be discussed in more detail below, there may be various aspects to certain embodiments. For example, certain embodiments may relate to the on/off configurability of buffering via operations, administration, and maintenance (OAM). Moreover, certain embodiments may relate to a procedure of buffering and conditionally applying the buffered data to trace content. Also, certain embodiments may relate to a list of information that can be buffered as important information in a troubleshooting context.

Certain embodiments may relate to configurable BTS behavior. For example, the buffering for every UE may happen if a certain control parameter and/or flag is set to "yes" by the OAM. In case the parameter/flag is set to "no," the buffering may be omitted. Such a setting can avoid any unnecessary increase in BTS utilization if an operator does not wish to utilize the function frequently. The unnecessary increase would be extra data always being buffered and discarded, if such data is never or rarely of interest. The flag or parameter could place a given BTS in an alerted or high attention mode, in which the BTS can be prepared for capturing the initial, otherwise untraceable, information.

Certain embodiments can define a way and list of information a BTS is to buffer for every UE and to keep until the BTS reaches the point in communication at which trace activating NE happens.

Certain embodiments may be implemented in a standard. For example, the standard may include a list of information that shall be buffered and a list of information that may be buffered. The "may be" buffered list may include additional information items that are not mandatory in the list of information that "shall be" buffered. For example, messages 1, 2, and 5 in FIG. 1 may be on the "may be" buffered list but not on the "shall be" buffered list. The specification may also indicate the point in a message exchange flow upon which BTS is to flush buffered messages to a traces collection entity (TCE) or is to release buffered messages when no signaling based trace activation is requested.

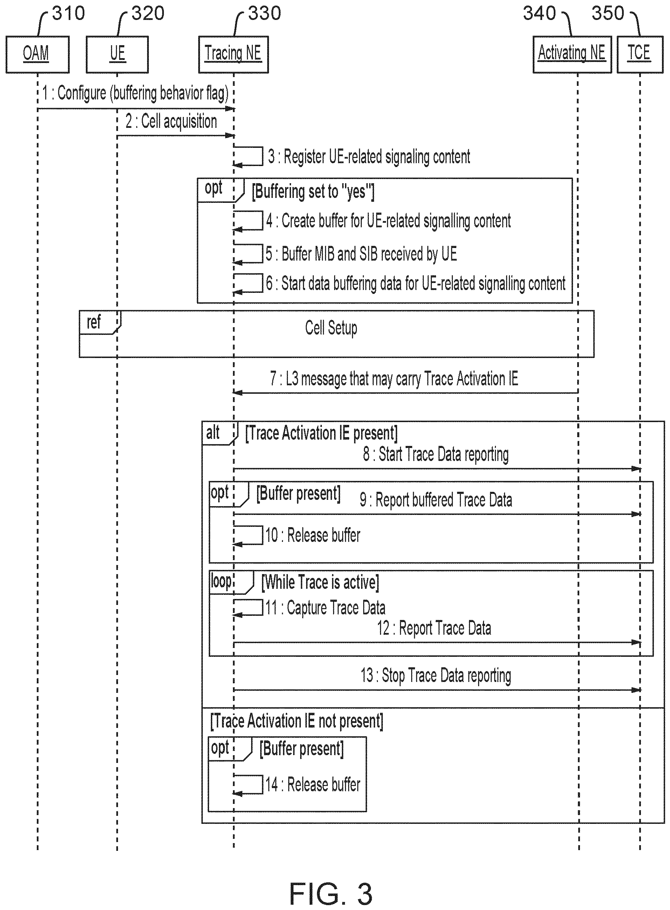

FIG. 3 illustrates an example sequence flow for buffering of messages in a subscriber trace, according to certain embodiments. As shown in FIG. 3, at 1 an OAM 310 can configure a tracing network element (NE) 330 using, for example, a buffering behavior flag. The tracing NE can be a network element that is configured for buffering, collecting and sending traced messages of UE 320, or any other UE, to trace collection entity (TCE) 350. The tracing NE 330 may be, for example, an evolved Node B (eNB) next generation Node B (gNB). At 2, UE 320 may perform cell acquisition to tracing NE 330. At 3, the tracing NE 330 can register UE-related signaling content.

If the tracing NE 330 has buffering set to "yes," or if the tracing NE 330 is set to unconditionally buffer (not shown), then at 4 the tracing NE 330 can create a buffer for UE-related signaling content. At 5, the tracking NE 330 can buffer the master information block (MIB) and system information block (SIB) received by the UE. The configuration parameter/flag, set by OAM 310, can change the behavior of the tracing NE 330 such that the tracing NE 330 performs the processes illustrated 3, 4 and 5. With the flag set to "off" or no buffering, the processes at 3, 4, and 5 are not executed. With the flag set to "yes," the processes may be executed according to certain embodiments.

Subsequently, call setup may be performed for UE 320 by tracing NE 330. As process 7, at an appropriate time, activating NE 340 may send a layer 3 message that may carry a trace activation information element (IE). The trace activation IE can be UE-specific or subscriber-specific. If the layer 3 message does not include the trace activation IE or the IE is set to "no trace" or the like, then the process may continue to process 14, where the buffer can be released by tracing NE 330.

Otherwise, when the layer 3 message at 7 includes a trace activation IE, at 8 the tracing NE 330 can start trace data reporting to trace collection entity (TCE) 350. The tracing NE 330 can recognize that a buffer is present for UE 320. Accordingly, at 9, the tracing NE 330 can report the buffer to TCE 350. At 10, the tracing NE 330 can release the buffer.

While tracing remains active, at 11 the tracing NE 330 can capture the trace data. At 12, the tracing NE 330 can report the trace data to TCE 350. The reporting can be done in real-time.

When tracing is deactivated, for example upon the end or handover of the call, at 13 the tracing NE 330 may stop trace data reporting to TCE 350.

The processes at 4, 5, and 6 of FIG. 3 may be omitted if the operator is uninterested in capturing the initial messages.

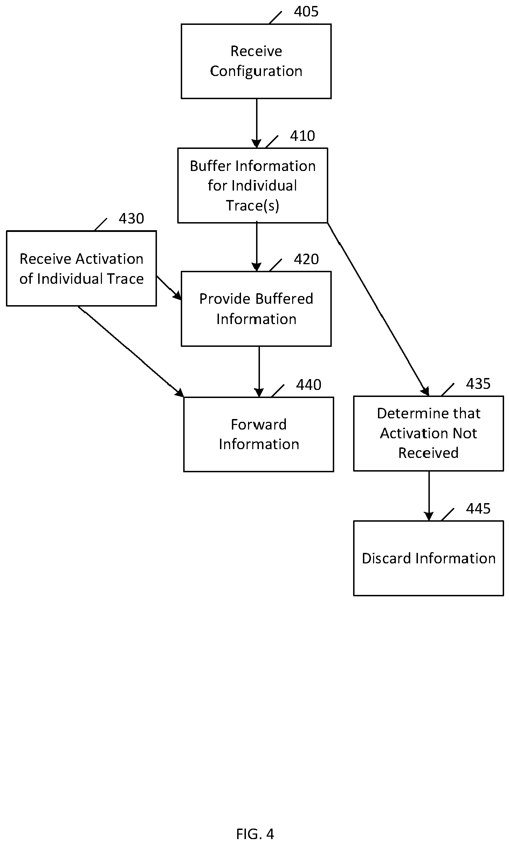

FIG. 4 illustrates an example flow diagram of a method for providing buffering of messages for more complete subscriber or user equipment tracing, according to certain embodiments.

The method can include, at 410, buffering information needed for an individual trace prior to an activation opportunity of the individual trace.

The method can also include, at 420, providing the buffering information to a trace collection entity conditioned on the individual trace being activated.

The individual trace can be a subscriber trace or a user equipment trace. This may be distinct from a cell trace, in which an entire cell may be traced. Because the individual subscriber or individual user equipment may not yet be known when buffering is to take place, the buffering may take place with respect to all connecting user equipment.

The method can also include, at 405, receiving a configuration to buffer the information needed for the individual trace. While this information may be needed for an individual trace, at this stage in the process the network element receiving the configuration (for example, a gNB or eNB) may not have received an activation of an individual trace. Accordingly, the network element may apply this configuration to the entire cell. The buffering at 410 can be performed in accordance with the configuration. This configuration may not specifically identify a user equipment.

The buffering can be performed with respect to a predetermined set of messages. For example, the messages discussed above with respect to FIGs. 1 and 2 may constitute the predetermined set. Alternatively, a subset or superset of those messages may be the predetermined set. The predetermined set may be selected according to one or more values that the messages may have in troubleshooting. FIGs. 1 and 2 are examples of one possible predetermined set, but FIGs. 1 and 2 should be understood as illustrations and examples, and not by way of limitation.

The method can also include, at 430, receiving an activation of the individual trace. The method can further include, at 440, forwarding the information to the trace collection entity responsive to receiving the activation. The forwarding at 440 may be how the providing at 420 is accomplished. The information to be forwarded may be the particular information associated with one individual subscriber or user equipment, even though the configuration for buffering may have resulted in multiple user equipment being buffered.

In an embodiment, the activation can be received from a core network. As another alternative, no activation may be received from the core network. For example, the activation may be received for a first user equipment, but not for a second user equipment. The method can include, at 435, determining that no activation was received within a predetermined time from starting the buffering. The starting here can refer to the starting for a particular user equipment or subscriber. The method can also include, at 445, discarding the information based on the determination that no activation was received.

It is noted that FIG. 4 is provided as one example embodiment of a method or process. However, certain embodiments are not limited to this example, and further examples are possible as discussed elsewhere herein.

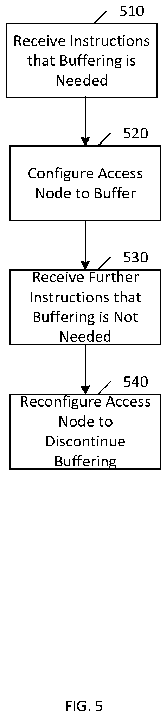

FIG. 5 illustrates an example flow diagram of a method for providing buffering of messages for more complete subscriber or user equipment tracing, according to certain embodiments. The method of FIG. 5 can be used alone or in combination with the method of FIG. 4.

There can be a determination made that buffering of information will needed for one or more individual trace in an area, prior to an activation opportunity of the individual trace(s). This determination may be made by an operator and provided to the OAM as instructions. Based on such an operator determination, the method may include, at 510, receiving instructions that buffering of information is needed to supplement an individual trace, prior to an activation opportunity of the individual trace.

The method can also include, at 520, configuring an access node to perform the buffering of the information needed to supplement the individual trace, prior to the activation opportunity of the individual trace, in accordance with the received instructions. The access node may be an eNB, gNB, or the like. The configuring at 520 may involve sending the configuration that is received at 405 in FIG. 4.

Subsequently, the operator may decide that the previously configured buffering is no longer needed, and may so instruct the OAM. Thus, the method can further include, at 530, receiving further instructions that the buffering is no longer needed. For example, when trouble shooting is started, the determination the leads to the instructions at 510 may be made, while when trouble shooting is completed, the determination that leads to the further instructions at 530 may be made.

The method can additionally include, at 540, reconfiguring the access node to discontinue the buffering of the information based on the received further instructions.

It is noted that FIG. 5 is provided as one example embodiment of a method or process. However, certain embodiments are not limited to this example, and further examples are possible as discussed elsewhere herein.

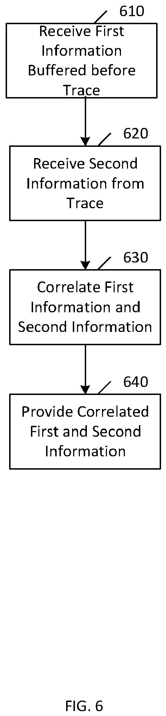

FIG. 6 illustrates an example flow diagram of a method for providing buffering of messages for more complete subscriber or user equipment tracing, according to certain embodiments. The method of FIG. 6 can be used alone or in combination with the methods of FIGs. 4 and 5.

The method can include, at 610, receiving first information buffered prior to an activation opportunity of an individual trace. This may be the information collected in FIG. 4 based on the configuration provided in FIG. 5.

As shown in FIG. 6, the method can also include, at 620, receiving second information obtained from the individual trace. This information may be information obtained after the individual trace is activated.

The method can further include, at 630, correlating the first information with the second information. The correlation may be made in the first instance at an access node and then passed to a trace collection entity, or the correlation may be made originally at the trace collection entity. For example, the access node, such as a BTS, may include a trace identifier with the first information. Thus, the trace collection entity may be able to associate the first information with the second information.

The method can additionally include, at 640, providing the correlated first information and second information as complete trace information. The complete trance information may be used for trouble shooting, for example for real-time trouble shooting.

It is noted that FIG. 6 is provided as one example embodiment of a method or process. However, certain embodiments are not limited to this example, and further examples are possible as discussed elsewhere herein.

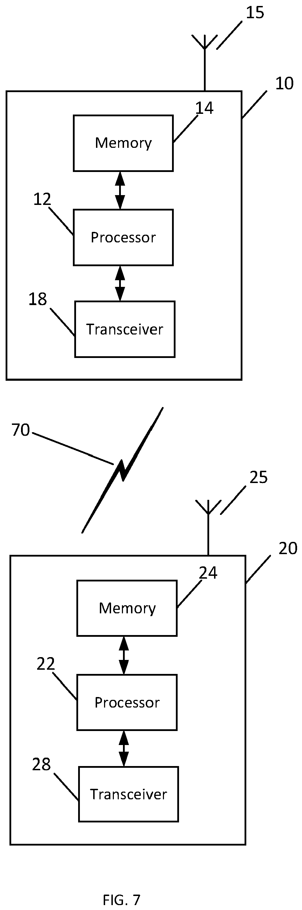

FIG. 7 illustrates an example of a system that includes an apparatus 10, according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may comprise an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a mid-haul interface, referred to as an F1 interface, and the DU(s) may have one or more radio unit (RU) connected with the DU(s) over a front-haul interface. The DU may be a logical node that includes a subset of the gNB functions, depending on the functional split option. It should be noted that one of ordinary skill in the art would understand that apparatus 10 may include components or features not shown in FIG. 7.

As illustrated in the example of FIG. 7, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in FIG. 7, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of global system for mobile communications (GSM), narrow band Internet of Things (NB-IoT), LTE, 5G, WLAN, Bluetooth (BT), Bluetooth Low Energy (BT-LE), near-field communication (NFC), radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be or may be a part of a network element or RAN node, such as a base station, access point, Node B, eNB, gNB, TRP, HAPS, IAB node, relay node, WLAN access point, satellite, or the like. In one example embodiment, apparatus 10 may be a gNB or other radio node, or may be a CU and/or DU of a gNB. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in FIGs. 3-6, or any other method described herein. In some embodiments, as discussed herein, apparatus 10 may be configured to perform a procedure relating to providing buffering of messages for more complete subscriber or user equipment tracing, for example.

FIG. 7 further illustrates an example of an apparatus 20, according to an embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in FIG. 7.

As illustrated in the example of FIG. 7, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 7, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, FIGs. 3-6, or any other method described herein. For example, in an embodiment, apparatus 20 may be controlled to perform a process relating to providing buffering of messages for more complete subscriber or user equipment tracing, as described in detail elsewhere herein.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of any of the operations discussed herein.

In view of the foregoing, certain example embodiments provide several technological improvements, enhancements, and/or advantages over existing technological processes and constitute an improvement at least to the technological field of wireless network control and/or management. Certain embodiments may have various benefits and/or advantages. For example, certain embodiments may enable buffering of messages for more complete subscriber or user equipment tracing. Such buffering may permit more accurate real-time trouble shooting without requiring logging of all the messages of a given cell.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to example embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

PARTIAL GLOSSARY:
- 5G: Fifth Generation
- BTS: Base Transceiver Station
- IE: Information Element
- MBA: Management Based Activation (of trace)
- NGAP: New Generation Application Protocol (between gNB and AMF)
- SA: StandAlone mode of 5G
- SBA: Signaling Based Activation (of trace)
- Activating NE: Network Element that sends request to start UE trace (eg. MME, neighbor eNB, gNB in case of LTE, and AMF neighbor eNB, gNB)
- Tracing NE: Network Element which is buffering, collecting and sending traced messages of UE to TCE (eg. eNB or gNB)
- TCE: Trace Collection Entity (a server that collects traced messages)
- UE: User Equipment (a mobile device connecting to a network)

## Claims

1. An apparatus, comprising:
at least one processor; and
at least one memory comprising computer program instructions,
wherein the at least one memory and the computer program instructions are configured to, with the at least one processor, cause the apparatus at least to perform:
buffering information needed for an individual trace prior to an activation opportunity of the individual trace; and
providing the buffering information to a trace collection entity conditioned on the individual trace being activated.

2. The apparatus of claim 1, wherein the individual trace comprises a subscriber trace or a user equipment trace.

3. The apparatus of claim 1, wherein the at least one memory and the computer program instructions are configured to, with the at least one processor, cause the apparatus at least to perform:
receiving a configuration to buffer the information needed for the individual trace, wherein the buffering is performed in accordance with the configuration.

4. The apparatus of claim 1, wherein the buffering is performed with respect to a predetermined set of messages.

5. The apparatus of claim 1, wherein the at least one memory and the computer program instructions are configured to, with the at least one processor, cause the apparatus at least to perform:
receiving an activation of the individual trace; and
forwarding the information to the trace collection entity responsive to receiving the activation.

6. The apparatus of claim 1, wherein the activation is received from a core network.

7. The apparatus of claim 1, wherein the at least one memory and the computer program instructions are configured to, with the at least one processor, cause the apparatus at least to perform:
determining that no activation was received within a predetermined time from starting the buffering; and
discarding the information based on the determination that no activation was received.

8. An apparatus, comprising:
at least one processor; and
at least one memory comprising computer program instructions,
wherein the at least one memory and the computer program instructions are configured to, with the at least one processor, cause the apparatus at least to perform:
receiving instructions that buffering of information is needed to supplement an individual trace, prior to an activation opportunity of the individual trace; and
configuring an access node to perform the buffering of the information needed to supplement the individual trace, prior to the activation opportunity of the individual trace, in accordance with the received instructions.

9. The apparatus of claim 8, wherein the at least one memory and the computer program instructions are configured to, with the at least one processor, cause the apparatus at least to perform:
receiving further instructions that the buffering is no longer needed; and
reconfiguring the access node to discontinue the buffering of the information based on the received further instructions.

10. An apparatus, comprising:
at least one processor; and
at least one memory comprising computer program instructions,
wherein the at least one memory and the computer program instructions are configured to, with the at least one processor, cause the apparatus at least to perform:
receiving first information buffered prior to an activation opportunity of an individual trace;
receiving second information obtained from the individual trace;
correlating the first information with the second information; and
providing the correlated first information and second information as complete trace information.

11. A method, comprising:
buffering information needed for an individual trace prior to an activation opportunity of the individual trace; and
providing the buffering information to a trace collection entity conditioned on the individual trace being activated.

12. The method of claim 11, wherein the individual trace comprises a subscriber trace or a user equipment trace.

13. The method of claim 11, further comprising:
receiving a configuration to buffer the information needed for the individual trace, wherein the buffering is performed in accordance with the configuration.

14. A method, comprising:
receiving instructions that buffering of information is needed to supplement an individual trace, prior to an activation opportunity of the individual trace; and
configuring an access node to perform the buffering of the information needed to supplement the individual trace, prior to the activation opportunity of the individual trace, in accordance with the received instructions.

15. A method, comprising:
receiving first information buffered prior to an activation opportunity of an individual trace;
receiving second information obtained from the individual trace;
correlating the first information with the second information; and
providing the correlated first information and second information as complete trace information.
